# EUROPEAN PATENT APPLICATION

(11) **EP 4 147 903 A1**
(43) Date of publication of application: **15.03.2023**
(21) Application number: 21196620.5
(22) Date of filing: 14.09.2021
(51) Int. Cl.: B60L 53/18, B60L 53/302

(54) **CHARGING CABLE FOR CHARGING AN ELECTRIC VEHICLE, AND ELECTRIC VEHICLE SUPPLY EQUIPMENT WITH A CHARGING CABLE**

(71) Applicant: ABB E-mobility B.V., 2629 JG Delft (NL)
(72) Inventor: ZOON, Wiebe, 2623 NM Delft (NL)
(74) Representative: van Trier, Norbertus Henricus Gerardus

(57) **Abstract**

The invention relates to a charging cable for charging an electric vehicle, wherein the charging cable comprises a coolant supply tube extending in a longitudinal direction and configured for transporting a coolant through the charging cable, an earth extending in a longitudinal direction substantially parallel to the coolant supply tube and configured for serving as ground, a plurality of power wires extending in the longitudinal direction and configured for conducting positive and/or negative direct current, and an outer layer extending in the longitudinal direction and surrounding the coolant supply tube, the earth and the plurality of power wires, wherein each of the plurality of power wires comprises a power conductor and a power wire insulation surrounding the power conductor, wherein multiple spacers are provided between the power conductor and the power wire insulation such that a coolant channel is defined between the power conductor and the power wire insulation.

## Description

### BACKGROUND

The invention relates to a charging cable for charging an electric vehicle. Furthermore, the invention relates to an electric vehicle supply equipment having such a charging cable for charging an electric vehicle, and to a method for liquid-cooling a charging cable for charging an electric vehicle.

In recent years, the popularity of electric vehicles has increased dramatically in many countries. In order to charge the electric vehicles, electric vehicle chargers are being installed in public space such as parking lots or at private premises. The electric vehicle chargers are each provided with a charging cable having a charging connector configured to be plugged into the electric vehicle. Due to the direct connection between the electric vehicle charger and the battery of the electric vehicle, fast charging with a minimum of charge electronics inside the electric vehicle is enabled.

### SUMMARY OF THE INVENTION

Due to the increasing popularity of electric vehicles, there is a lot of development in respect of both the electric vehicle chargers and the electric vehicles. An example of such development is the growing battery capacity of the electric vehicles to extend the driving range of the electric vehicles. Electric trucks and busses have an even higher battery capacity than electric cars in order to achieve a decent driving range. Because of the increasing battery capacity of electric vehicles, the need for fast charging increases as well. In order to charge batteries with the increased battery capacity, the electric vehicle chargers apply higher charging currents such that the time required for charging the battery is kept substantially the same or is even shortened.

In order to be able to apply higher charging currents, the charging cables need to be thicker to be able to transport the higher charging current. If the charging cable becomes too thick, it becomes too heavy to be handled manually. Charging cables rated for a continuous charging current above 300A need to be actively cooled during charging, as conventional charging cables suitable for a continuous charging current above 300A are too heavy to handle. By cooling the charging cables during charging, the thickness of the charging cable may be limited.

At the moment, there are actively cooled charging cables available that are rated for charging at 500A to 850A, which are specifically designed for the current generation of electric cars. During charging, a coolant is circulated through the charging cable, which coolant cools both the charging connector and the conductors within the charging cable.

To charge an electric long distance truck in a timely manner, the charging current has to be as high as up to 3000A. A disadvantage of the known actively cooled charging cables is that by simply scaling up the actively cooled charging cables to be rated for a charging current of up to 3000A results in a charging cable that is difficult to operate and/or to handle by a user.

It is an object of the present invention to ameliorate or to eliminate one or more disadvantages of the known charging cable, to provide an improved charging cable or to at least provide an alternative charging cable.

According to a first aspect, the invention provides a charging cable for charging an electric vehicle, wherein the charging cable comprises:
a coolant supply tube extending in a longitudinal direction and configured for transporting a coolant through the charging cable;
an earth extending in a longitudinal direction substantially parallel to the coolant supply tube and configured for serving as ground;
a plurality of power wires extending in the longitudinal direction and configured for conducting positive and/or negative direct current; and
an outer mantle extending in the longitudinal direction and surrounding the coolant supply tube, the earth and the plurality of power wires,
wherein each of the plurality of power wires comprises a power conductor and a power wire insulation surrounding the power conductor, wherein multiple spacers are provided between the power conductor and the power wire insulation such that a coolant channel is defined between the power conductor and the power wire insulation.

In order to charge an electric vehicle by means of the charging cable according to this disclosure the charging cable has to be electrically connected to the battery of the electric vehicle. This may be done by inserting a charging connector arranged at one end of the charging cable into a charging socket arranged at the electric vehicle. In order to insert the charging connector into the charging socket, the charging cable usually needs to be bent and twisted in order to maneuver the charging connector into a proper orientation with respect to the charging socket, such that the charging connector may be inserted into the charging socket smoothly. The charging cable according to this disclosure comprises a plurality of power wires, wherein, for example, the half of the plurality of power wires is configured for transporting DC+ and the other half of the plurality of power wires is configured for transporting DC-. The multiple power wires for transporting DC+ and DC- grant a better flexibility to the charging cable in comparison to a charging cable with a single power wire for DC+ and a single wire for DC-.

Furthermore, each power wire is provided with a power conductor, a power wire insulation surrounding the power conductor, and multiple spacers provided between the power conductor and the power wire insulation, thereby defining a coolant channel such that each power wire may be individually cooled. The spacers between the power insulation and the power conductor allow the power insulation and the power conductor to deform slightly with respect to each other and/or to move with respect to each other during operation, in particular during maneuvering of the charging cable. At their turn, the power wires are enabled to deform slightly and/or to move with respect to the outer mantle of the charging cable. Thus, the individual components of the charging according to the present disclosure are enabled to deform slightly and/or to move with respect to each other. This is advantageous, as the present disclosure presents a charging cable that is flexible and suitable for a charging current up to 3000A, while the charging cable still can be handled by a user relatively easily.

In the context of the present disclosure, flexibility of the charging cable can be understood as the capability of the charging cable to bend and/or to twist.

In an embodiment, the multiple spacers comprise beads that are arranged between the power conductor and the power wire insulation, wherein the beads are provided parallel to the power conductor or are spiraling around the power conductor. The beads are provided for keeping the power conductor centered within the power wire insulation. By keeping the power conductor centered, it is prevented that the power conductor moves towards and, optionally, against the power wire insulation. As a result, coolant flowing through the coolant channel flows around the power conductor and, therefore, is enabled to cool the power conductor evenly.

In an alternative embodiment, the power wire insulation has an inner surface, and wherein the spacers comprise protrusions that are provided at the inner surface of the power wire insulation, preferably wherein the power wire insulation and the spacers are manufactured integrally. Preferably, the protrusions are triangular protrusions, each having a base and an apex, wherein the base is facing towards the inner surface of the power wire insulation, and the apex is facing towards the power conductor. Preferably, each power wire comprises an odd number of spacers, since this provides the most flexible charging cable.

In an embodiment, a coolant is provided within the coolant channel and/or the coolant supply tube. Preferably the coolant is an ultrapure water/glycol mixture.

In an embodiment, the power conductors of each of the power wires is substantially wedge-shaped. Due to the properties of the power conductor associated with the wedge-shape thereof, each of the power conductors may be harder.

In an embodiment, the power conductor of each of the power wires has a diameter of about 8 mm, wherein the power wire insulation has an inner diameter of about 12 mm, wherein the power wire insulation has an outer diameter of about 15 mm, wherein the power wire insulation has a wall thickness of about 1.5 mm, wherein the charging cable has a length of about 5.5 m, wherein the power conductor of each of the power wires has a cross-section of about 50 mm², and/or wherein the coolant supply tube has a diameter of about 10 mm.

In an embodiment, the earth is provided around the coolant supply tube. Preferably, the coolant supply tube is arranged in the middle of the charging cable. By providing the earth around the coolant supply tube, for example by weaving the earth around the coolant supply tube, the diameter of the coolant supply tube increases slightly. This is advantageous, as the plurality of power wires, for example 6 power wires, therefore fits better around the coolant supply tube and thus the core of the charging cable. This is advantageous, as it contributes to maintaining the power wires in place within the outer mantle of the charging cable.

In an embodiment, the power conductor of each of the power wires is manufactured from a material selected from a group comprising aluminum and copper.

In an embodiment, the charging cable is rated for 1000A, preferably for 2000A, more preferably for 3000A.

According to a second aspect, the invention provides an electric vehicle supply equipment, EVSE, for charging an electric vehicle, comprising a charging cable according to the first aspect of the invention, a charging connector configured for being connected to the electric vehicle, and a cooling unit,
wherein the charging cable is provided between the cooling unit and the charging connector,
the cooling unit is configured for transporting coolant towards the charging connector through the coolant supply tube, and
the charging connector is configured for returning the coolant towards the cooling unit through the coolant channel of each power wire.

The EVSE has at least the same technical advantages as described in relation to the charging cable according to the first aspect of the invention.

Furthermore, in the context of the present application, an electric vehicle supply equipment (EVSE) may be referred to as electric vehicle charger, electric vehicle, EV, charging station, electric recharging point, charging point, charge point, charge post or electronic charging station (ECS). The electric vehicle charger is an element in an infrastructure that supplies electric energy for recharging of electric vehicles, including electric cars, neighbourhood electric vehicles, electric busses and plug-in hybrids, for example via a charging cable and a charging connector, via a pantograph and/or via an automatic connection system to the EV. Electric vehicle chargers usually comply with standards for electric vehicle fast charging, such as the so-called Combined Charging System (CCS) protocol according to IEC 61851-23 and SAE J1772 standard for charging electric vehicles both in the US and in the European Union, EU. The Combined Charging System (CCS) protocol is a fast charging method for charging electric vehicles delivering high-voltage direct current via a charging connector derived from SAE J1772 standard (IEC Type 1) or IEC Type 2 connector. The proposed electric vehicle charging arrangement may be advantageously used with even higher charging currents such as or more than 500A, 600A or 3000A, voltages such as or higher 1000V, 1500V or 3000V and/or in combination with newer standards not yet defined requiring higher currents.

In an embodiment, the coolant is an ultrapure water/glycol mixture.

According to a third aspect, the invention provides a method for liquid-cooling a charging cable for charging an electric vehicle, wherein the charging cable comprises:
a coolant supply tube extending in a longitudinal direction and configured for transporting a coolant through the charging cable;
an earth extending in a longitudinal direction substantially parallel to the coolant supply tube and configured for serving as ground;
a plurality of power wires extending in the longitudinal direction and configured for conducting positive and/or negative direct current; and
an outer mantle extending in the longitudinal direction and surrounding the coolant supply tube, the earth and the plurality of power wires,
wherein each of the plurality of power wires comprises a power conductor and a power wire insulation surrounding the power conductor, wherein multiple spacers are provided between the power conductor and the power wire insulation such that a coolant channel is defined between the power conductor and the power wire insulation,
wherein the method comprises the step of:
   transporting coolant through the coolant supply channel and the coolant channel of each of the plurality of power wires.

The method according to the invention has at least the same technical advantages as described in relation to the charging cable according to the first aspect of the invention.

Ultrapure water is a term commonly used in the semiconductor industry to emphasize the fact that the water is treated to the highest levels of purity for all contaminant types, including: organic and inorganic compounds; dissolved and particulate matter; volatile and non-volatile; reactive, and inert; hydrophilic and hydrophobic; and dissolved gases.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a sectional view of a power wire of a charging cable according to an embodiment of the invention;
Figure 2 shows a sectional view of a power wire of a charging cable according to an alternative embodiment of the invention;
Figure 3 shows a sectional view of a charging cable with the power wire of figure 2 according to an embodiment of the invention; and
Figure 4 shows a schematic view of an electric vehicle supply equipment according to an embodiment of the invention.

### DETAILED DESCRIPTION OF THE INVENTION

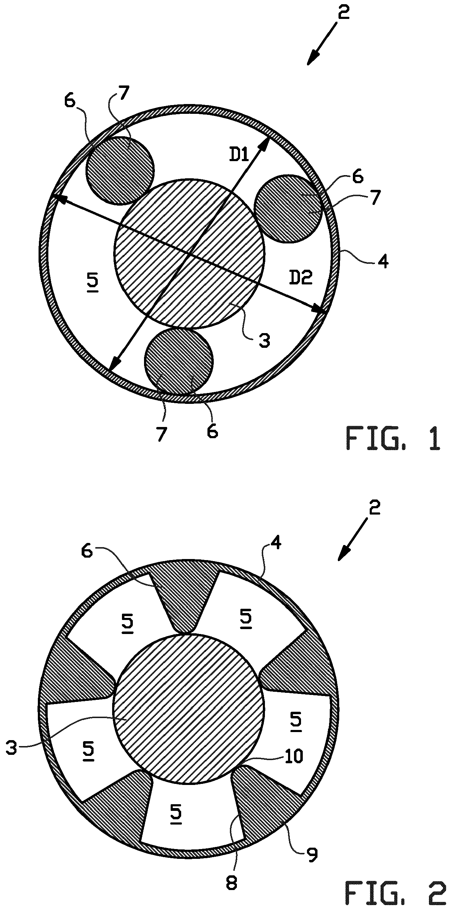

A charging cable 1 according to the invention is provided with a plurality of power wires 2. Such a charging cable 1 may be used for transferring a direct current, DC, from a charge post, to which the charging cable 1 is connected at one end thereof, to a charging connector, which is provided at the charging cable 1 at another end thereof. A sectional view of a power wire 2 of a charging cable 1 according to an embodiment of the invention is shown in figure 1. The power wire 2 comprises a power conductor 3 for conducting a negative DC or a positive DC through the power wire 2. The power conductor 3 is manufactured from copper and has a diameter of about 8 mm, which results in a cross-section of about 50 mm².

A power wire insulation 4 is provided around the power conductor 3, such that the power wire insulation 4 surrounds the power conductor 3 in order to prevent the power conductor 3 from coming into contact with another not shown power conductor of an adjacent power wire 2. The power wire insulation 4 is manufactured from an electrically insulating material. As shown in figure 1, the power wire insulation 4 has a substantially cylindrical shape and has an inner diameter D1 of about 12 mm and an outer diameter D2 of about 15 mm. The wall thickness of the power wire insulation 4, therefore, is about 1.5 mm. Since the inner diameter D1 of the power wire insulation 5 is larger than the diameter of the power wire 3, a coolant space 5, also called coolant channel, is defined between the power conductor 3 and the power wire insulation 4. A coolant, such as ultrapure water/glycol may flow and/or be forced through the coolant space 5 in order to cool the power conductor 3.

As shown in figure 1, three spacers 6 are arranged within the coolant space 5, which spacers are evenly distributed around the power conductor 3. The spacers 6 are provided for centering the power conductor 3 within the power wire insulation 4. Each of the spacers 6 comprises a bead 7 that runs substantially parallel to the power conductor 3 or, optionally, is spiraling around the power conductor 3. There is no need for the beads 7 to spiral around the power conductor 3, as long as the beads 7 stay in place.

Alternatively, as shown in figure 2, the spacers 6 comprise triangular protrusions 8 extending from the inner surface of the power wire insulation 4 into the coolant space 5 and towards the power conductor 3, thereby contacting the power conductor 3. Each of the triangular protrusions 8 has a basis 9, which is directed towards the inner surface of the power wire insulation 4, and an apex 10, which is directed towards and in contact with the power conductor 3. By directing the apices 10 of the triangular protrusions 8 towards the power conductor 3, a contact surface area of the power conductor 3, which is the part thereof that is not covered by the triangular protrusions 8, is kept as large as possible. The triangular protrusions 8 and the power wire insulation 4 may be manufactured by extruding.

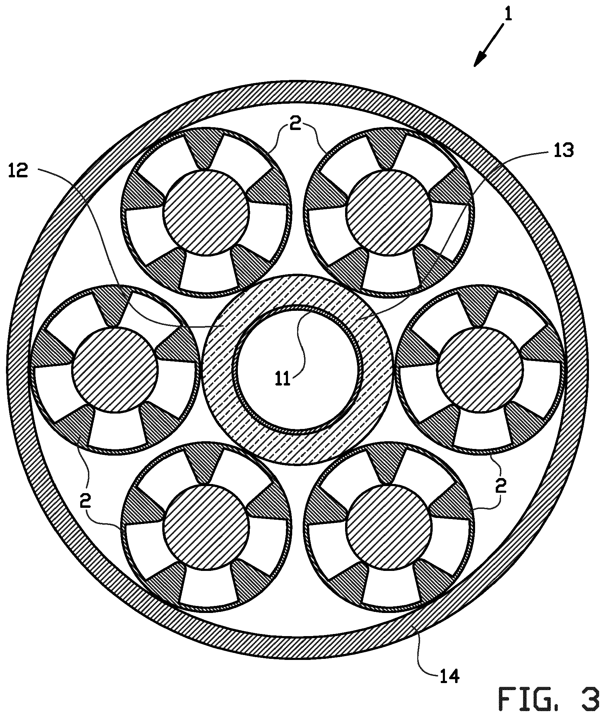

A charging cable 1, according to an embodiment of the invention, with a power wire 2 as shown in figure 2 is shown in figure 3. The charging cable 1 comprises a number of power wires 2, in particular six power wires 2, each configured for conducting positive direct current, DC, or negative DC. The power wires 2 are arranged around a coolant supply tube 11, in particular a water supply tube, such that, for example, alternately one power wire 2 conducts positive DC and another, next power wire 2 conducts negative DC. The coolant supply tube 11 is configured for transporting coolant, such as water through the charging cable 1, and has a surface area of about 300 mm² .

The charging cable 1 is further provided with an earth wire 12 running parallel to the coolant supply tube 11. The earth wire 12 is provided for providing a protective earth to the charging cable 1. As shown in figure 3, the earth wire 12 comprises an earth wire mantle 13 that is woven coaxially over the coolant supply tube 11. The earth wire mantle 13 increases the diameter of the coolant supply tube 11 slightly, such that the power wires 2 fit better around the coolant supply tube 11.

Furthermore, the charging cable 1 comprises an outer mantle 14 provided around the power wires 2, the coolant supply tube 11, and the earth wire 12, in order to shield them from the environment. Although not shown in figure 3, the outer mantle 14 comprises, from inside to outside, a thin plastic sleeve, an earthed EMC shield, a thin plastic sleeve, a hard plastic spiral to prevent buckling, a thin plastic wrap to prevent sticking of an outer layer to the spiral, and the outer layer made of

The outer diameter of the charging cable 1 is about 5 cm and the weight of the charging cable 1 is in the range of 4.2 kg/m. The charging cable 1 according to the invention with a total length of about 5.5 m is well manageable for a user with proper support.

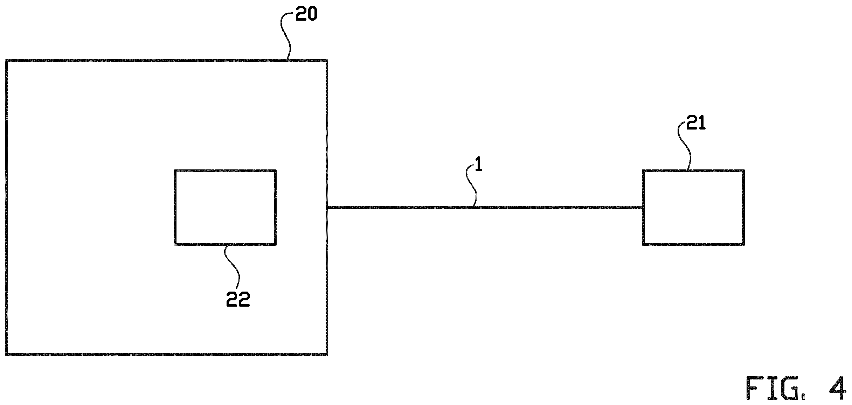

A schematic view of an electric vehicle supply equipment, EVSE, 20 according to an embodiment of the invention, is shown in figure 4. The EVSE 20 comprises the charging cable 1 and a charging connector 21. The EVSE 20, for example, is connected to a not shown alternating current, AC, grid via a transformer and/or a converter for receiving electrical energy from the AC grid. The received electrical energy is transformed and/or converted into DC suitable for charging an electric vehicle by the EVSE 20. The transformed and/or converted DC is intended for being supplied to a not shown electric vehicle via the charging cable 1, which may have a length of about 5.5 m, wherein the electric vehicle is connected to the EVSE 20 by the charging connector 21. The EVSE 20 charges the electric vehicle with a current equal to or up to 3000 A, when the EVSE 20 charges at a single charging cable 1, or to 500 A, when the EVSE 20 charges at two charging cables 1.

The EVSE 20 further comprises a cooling unit 22 with, for example, a liquid coolant reservoir, in particular an ultrapure water/glycol mixture reservoir, a heat exchanger for cooling the liquid coolant, and a pump for circulating the coolant from the liquid coolant reservoir towards the charging connector 21 via the coolant supply tube 11. The charging connector 21 is configured for returning the coolant towards the cooling unit 22 via the coolant space 5 of each of the power wires 2, such that the coolant flows around the power conductor 3 of each power wire 2 for cooling the power wires 2. The pump, for example, is configured to pump 7 litres of coolant through the coolant supply tube 11 per minute.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

### LIST OF REFERENCE NUMERALS

- 1: charging cable
- 2: power wire
- 3: power conductor
- 4: power wire insulation
- 5: coolant space
- 6: spacer
- 7: bead
- 8: triangular protrusion
- 9: basis
- 10: apex
- 11: coolant supply tube
- 12: earth wire
- 13: earth wire mantle
- 14: outer mantle
- 20: electric vehicle supply equipment
- 21: charging connector
- 22: cooling unit

## Claims

1. Charging cable (1) for charging an electric vehicle, wherein the charging cable (1) comprises:
a coolant supply tube (11) extending in a longitudinal direction and configured for transporting a coolant through the charging cable (1);
an earth (12; 15) extending in a longitudinal direction substantially parallel to the coolant supply tube (11) and configured for serving as ground;
a plurality of power wires (2) extending in the longitudinal direction and configured for conducting positive and/or negative direct current; and
an outer mantle (14) extending in the longitudinal direction and surrounding the coolant supply tube (11), the earth (12; 15) and the plurality of power wires (2),
wherein each of the plurality of power wires (2) comprises a power conductor (3) and a power wire insulation (4) surrounding the power conductor (3), wherein multiple spacers (6) are provided between the power conductor (3) and the power wire insulation (4) such that a coolant channel (5) is defined between the power conductor (3) and the power wire insulation (4).

2. Charging cable (1) according to claim 1, wherein the multiple spacers (6) comprise beads (7) that are arranged between the power conductor (3) and the power wire insulation (4), wherein the beads (7) are provided parallel to the power conductor (3) or are spiraling around the power conductor (3).

3. Charging cable (1) according to claim 1, wherein the power wire insulation (4) has an inner surface, and wherein the spacers (5) comprise protrusions (8) that are provided at the inner surface of the power wire insulation (4), preferably wherein the power wire insulation (4) and the spacers (5) are manufactured integrally.

4. Charging cable (1) according to claim 3, wherein the protrusions (8) are triangular protrusions (8), each having a base (9) and an apex (10), wherein the base (9) is facing towards the inner surface of the power wire insulation (4), and the apex (10) is facing towards the power conductor (3).

5. Charging cable (1) according to any one of the preceding claims, wherein a coolant is provided within the coolant channel (5) and/or the coolant supply tube (11) .

6. Charging cable (1) according to claim 5, wherein the coolant is an ultrapure water/glycol mixture.

7. Charging cable (1) according to any one of the preceding claims, wherein the power conductors (3) of each of the power wires (2) is substantially wedge-shaped.

8. Charging cable (1) according to any one of the preceding claims, wherein the power conductor (3) of each of the power wires (2) has a diameter of about 8 mm, wherein the power wire insulation (4) has an inner diameter of about 12 mm, wherein the power wire insulation (4) has an outer diameter of about 15 mm, wherein the power wire insulation (4) has a wall thickness of about 1.5 mm, wherein the charging cable (1) has a length of about 5.5 m, wherein the power conductor (3) of each of the power wires (2) has a cross-section of about 50 mm², and/or wherein the coolant supply tube (11) has a diameter of about 10 mm.

9. Charging cable (1) according to any one of the preceding claims, wherein the earth (15) is provided around the coolant supply tube (11).

10. Charging cable (1) according to any one of the preceding claims, wherein the coolant supply tube (11) is arranged in the middle of the charging cable (1).

11. Charging cable according to any one of the preceding claims, wherein the power conductor (3) of each of the power wires (2) is manufactured from a material selected from a group comprising aluminum and copper.

12. Charging cable (1) according to any one of the preceding claims, wherein the charging cable (1) is rated for 1000A, preferably for 2000A, more preferably for 3000A.

13. Electric vehicle supply equipment, EVSE, (20) for charging an electric vehicle, comprising a charging cable (1) according to any one of the preceding claims, a charging connector (21) configured for being connected to the electric vehicle, and a cooling unit (22), wherein the charging cable (1) is provided between the cooling unit (22) and the charging connector (21),
the cooling unit (22) is configured for transporting coolant towards the charging connector (21) through the coolant supply tube (11), and
the charging connector (21) is configured for returning the coolant towards the cooling unit (22) through the coolant channel (5) of each power wire (2).

14. Electric vehicle supply equipment (20) according to claim 13, wherein the coolant is an ultrapure water/glycol mixture.

15. Method for liquid-cooling a charging cable (1) for charging an electric vehicle, wherein the charging cable (1) comprises:
a coolant supply tube (11) extending in a longitudinal direction and configured for transporting a coolant through the charging cable (1);
an earth (12; 15) extending in a longitudinal direction substantially parallel to the coolant supply tube (11) and configured for serving as ground;
a plurality of power wires (2) extending in the longitudinal direction and configured for conducting positive and/or negative direct current; and
an outer mantle (14) extending in the longitudinal direction and surrounding the coolant supply tube (11), the earth (12; 15) and the plurality of power wires (2),
wherein each of the plurality of power wires (2) comprises a power conductor (3) and a power wire insulation (4) surrounding the power conductor (3), wherein multiple spacers (6) are provided between the power conductor (3) and the power wire insulation (4) such that a coolant channel (5) is defined between the power conductor (3) and the power wire insulation (4),
wherein the method comprises the step of:
transporting coolant through the coolant supply channel (11) and the coolant channel (5) of each of the plurality of power wires (2).
